# DEMANDE DE BREVET EUROPEEN

(11) **EP 4 431 752 A1**
(43) Date de publication de la demande: **18.09.2024**
(21) Numéro de dépôt: 24163593.7
(22) Date de dépôt: 14.03.2024
(51) Int. Cl.: F16B 13/14, F16B 37/00, B29C 65/06, B29C 65/00

(54) **CHEVILLE DE FIXATION PAR SOUDAGE PAR ROTATION ET PROCEDE D'ASSEMBLAGE ASSOCIE**

(30) Priorité: 14.03.2023 FR 2302322
(71) Demandeur: Unit Product SAS, 81120 Réalmont (FR)
(72) Inventeur: HARDY, David, 31530 Mérenvielle (FR)
(74) Mandataire: Gevers & Orès

(57) **Abrégé**

L'invention concerne un cheville (16) de fixation qui est destinée à être fixée par soudage par rotation dans un orifice (18) d'un support (10) en matériau plastique, la cheville (16) de fixation comportant un corps (22) de fixation par soudage qui présente une face (24) externe de forme tronconique de révolution autour d'un axe (A) principal qui s'étend depuis une grande base (26) destinée à affleurer à une surface du support (10), jusqu'à une petite base (28) destinée à être enfoncée axialement dans l'orifice (18) du support (10).

## Description

### Domaine technique de l'invention

L'invention concerne une cheville de fixation qui est destinée à être fixée par soudage par rotation dans un orifice d'un support en matériau plastique, la cheville de fixation comportant un corps de fixation par soudage qui présente une face externe de forme tronconique de révolution autour d'un axe principal qui s'étend depuis une grande base destinée à affleurer à une surface du support, jusqu'à une petite base destinée à être enfoncée axialement dans l'orifice du support.

### Arrière-plan technique

Il est connu de réaliser des panneaux à structure en sandwich pour de nombreuses applications, notamment pour réaliser des parois ou des cloisons de véhicules. De tels panneaux présentent généralement une âme en matériau plastique, par exemple en PET expansé, prise en sandwich entre deux plis de matériaux composites qui permettent de conférer au panneau sa solidité. De tels panneaux sont avantageusement légers et solides.

Il est souvent nécessaire de fixer divers objets au panneau. Or, l'âme en plastique présente une consistance qui n'est pas compatible à l'utilisation directe de vis de fixation. Lorsqu'elles sont vissées directement dans l'âme du panneau, les vis présentent en effet une très faible résistance à l'arrachement.

On a déjà proposé de fixer tout d'abord des chevilles munies de filetages particulièrement saillants dans le panneau, puis de visser les vis de fixation dans les chevilles. Cependant, si la résistance à l'arrachement est légèrement améliorée, elle demeure insuffisante pour la plupart des applications.

L'invention propose de résoudre ces problèmes en proposant une cheville et un procédé de fixation de la cheville dans le panneau qui permettent d'obtenir une excellente résistance à l'arrachement.

### Résumé de l'invention

L'invention propose une cheville de fixation qui est destinée à être fixée par soudage par rotation dans un orifice d'un support en matériau plastique, la cheville de fixation comportant un corps de fixation par soudage qui présente une face externe de forme tronconique de révolution autour d'un axe principal qui s'étend depuis une grande base destinée à affleurer à une surface du support, jusqu'à une petite base destinée à être enfoncée axialement dans l'orifice du support.

La cheville est caractérisée en ce que le corps de fixation comporte un alésage central lisse borgne qui débouche uniquement par une face d'extrémité axiale libre de la cheville, le corps de fixation étant plein entre l'alésage central et sa face tronconique externe.

Cela permet d'obtenir une cheville simple à réaliser et un corps de fixation très rigide de manière à favoriser le soudage par rotation.

Selon une autre caractéristique de la cheville réalisée selon les enseignements de l'invention, la face externe tronconique du corps présente un angle au sommet qui est compris entre 24° et 25°. Cet angle permet en effet l'obtenir un frottement particulièrement efficace de la cheville avec le support. Ainsi, on obtient une cheville rapide à fixer avec une fixation particulièrement solide de la cheville.

Selon une autre caractéristique de la cheville réalisée selon les enseignements de l'invention, l'angle au sommet de la face externe tronconique du corps de fixation est sensiblement égal à 24,5°.

Selon une autre caractéristique de la cheville réalisée selon les enseignements de l'invention, la cheville comporte une pointe de centrage de forme conique de révolution autour de l'axe principal qui s'étend axialement dans la continuité de la face externe tronconique du corps depuis la petite base, un sommet de la pointe de centrage formant une première extrémité axiale de la cheville.

Selon une autre caractéristique de la cheville réalisée selon les enseignements de l'invention, la pointe de centrage présente un angle au sommet supérieur à l'angle au sommet de la face externe tronconique du corps de fixation.

Selon une autre caractéristique de la cheville réalisée selon les enseignements de l'invention, la pointe de centrage présente un angle au sommet d'environ 90°.

Selon une autre caractéristique de la cheville réalisée selon les enseignements de l'invention, la cheville est réalisée en une seule pièce en un matériau plastique, par exemple par moulage.

Selon une autre caractéristique de la cheville réalisée selon les enseignements de l'invention, la grande base du corps de fixation forme la face d'extrémité libre de la cheville.

Selon une autre caractéristique de la cheville réalisée selon les enseignements de l'invention, la grande base présente une empreinte destinée à permettre l'accouplement avec un outil de mise en rotation autour de son axe principal.

L'invention concerne aussi un procédé d'assemblage de la cheville de fixation, réalisée selon les enseignements de l'invention, avec un support de matériau plastique, le matériau plastique du support présentant une température de fusion sensiblement égale à celle du matériau constituant le corps de fixation de la cheville, le procédé comportant chronologiquement :
- une étape de perçage d'un orifice dans une face du support ;
- une étape de positionnement de la petite base du corps de fixation de la cheville de fixation dans l'ouverture de l'orifice ;
- une étape d'enfoncement axial et de mise en rotation de la cheville de fixation à une vitesse suffisante et avec une poussée axiale suffisante pour que le frottement entre la face externe tronconique du corps de fixation et le matériau constituant le support provoque la fusion simultanée d'une couche superficielle de la face externe du corps de fixation et du matériau en contact du support, les matériaux en fusion de la cheville de fixation et du support se mélangeant ;
- une étape de refroidissement qui intervient lorsque la grande base du corps de fixation affleure sensiblement à la face du support, au cours de laquelle la rotation est interrompue pour que le mélange de matériau plastique en fusion se solidifie pour réaliser la fixation par soudage de la cheville de fixation dans le support.

Selon une autre caractéristique du procédé d'assemblage réalisée selon les enseignements de l'invention, le diamètre du perçage est sensiblement égal au diamètre de la grande base du corps de fixation.

L'invention concerne également un ensemble composé d'une cheville de fixation et d'un support de matériau plastique, ladite cheville étant destinée à être fixée par soudage par rotation dans un orifice du support, la cheville de fixation comportant un corps de fixation par soudage qui présente une face externe de forme tronconique de révolution autour d'un axe principal qui s'étend depuis une grande base destinée à affleurer à une surface du support, jusqu'à une petite base destinée à être enfoncée axialement dans l'orifice du support, le corps de fixation comportant un alésage central lisse borgne qui débouche uniquement par une face d'extrémité axiale libre de la cheville, le corps de fixation étant plein entre l'alésage central et sa face tronconique externe, la cheville de fixation et le support étant constitués d'un même matériau plastique.

La température de fusion de la cheville et celle du support sont donc les mêmes.

Par exemple, le matériau plastique provient de bouteilles plastiques recyclées.

### Brève description des figures

D'autres caractéristiques et avantages de l'invention apparaitront au cours de la lecture de la description détaillée qui va suivre pour la compréhension de laquelle on se reportera aux dessins annexés qui sont décrits succinctement ci-dessous.
La figure 1 est une vue en perspective qui représente un panneau à structure en sandwich comportant une âme en matériau plastique prise entre deux plis.
La figure 2 est une vue en perspective qui représente une cheville réalisée selon les enseignements de l'invention.
La figure 3 est une vue en coupe axiale de la cheville représentée à la figure 2.
La figure 4 est une vue en coupe du panneau de la figure 1 après une étape de poinçonnage d'un pli.
La figure 5 est une vue similaire à celle de la figure 4, dans laquelle un orifice a été percé dans le panneau, la cheville de la figure 2 étant positionnée dans l'orifice.
La figure 6 est une vue similaire à celle de la figure 5, dans laquelle la cheville a été enfoncée et soudée au panneau par rotation dans l'orifice.

### Description détaillée de l'invention

Dans la suite de la description, on adoptera à titre non limitatif une orientation axiale dirigée selon l'axe principal de la cheville de fixation. On adoptera aussi des directions radiales dirigées orthogonalement à l'axe principal de la cheville.

Dans la suite de la description, on adoptera aussi des orientations longitudinales, verticales et transversales indiquées par le trièdre "L,V,T" des figures.

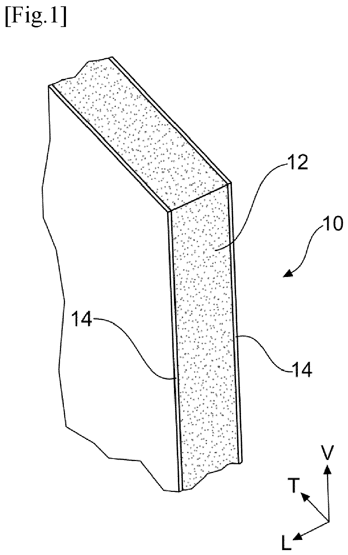

On a représenté à la figure 1 un panneau 10 composite comportant une âme 12 prise en sandwich entre deux plis 14 de matériau composite. Chaque pli 14 est réalisé en un même matériau composite. Le panneau 10 présente ici une forme rectangulaire.

Il s'agit par exemple d'un panneau 10 qui peut être utilisé pour l'aménagement intérieur de bateaux, d'avions, de camions, de trains, etc.

L'âme 12 est par exemple une plaque de structure pleine réalisée en mousse thermoplastique, tel que du polyéthylène téréphtalate recyclé (PET recyclé). Il s'agit par exemple d'une âme en PET expansé.

Chaque pli 14 comporte une armature imprégnée d'une matrice. L'armature est formée d'une pièce d'étoffe. L'étoffe est par exemple réalisée en fibres de basalte. L'étoffe peut être tissée ou non-tissée.

La matrice comporte par exemple une résine polymérisable par chauffage, aussi dite "thermodurcissable", telle que de l'époxyde. En variante, la matrice est une résine polymérisable à température ambiante, par exemple aux alentours de 20°C.

En variante, la matrice comporte une résine thermoplastique.

Ces matériaux présentent l'avantage d'être facilement recyclables. Il s'agit avantageusement de matériaux biosourcés et recyclés.

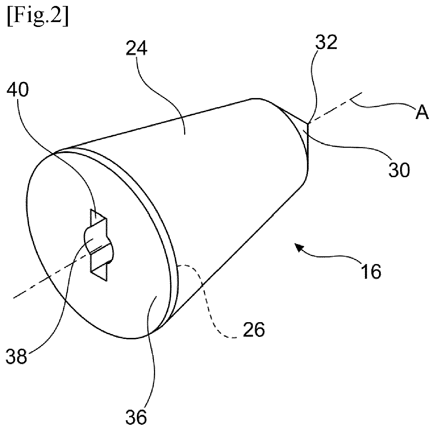

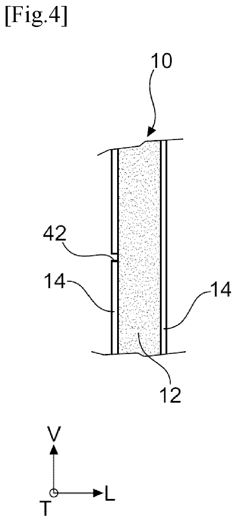

On a représenté à la figure 2, une cheville 16 de fixation qui est destinée à être fixée par soudage par rotation dans un orifice 18 d'un support en matériau plastique, ici dans un orifice 18 du panneau composite. La cheville 16 de fixation, après avoir été fixée au panneau 10, est destinée à recevoir une vis 20 de fixation pour permettre de fixer un élément au panneau, comme cela sera décrit en détails par la suite en référence aux figures 4 à 6.

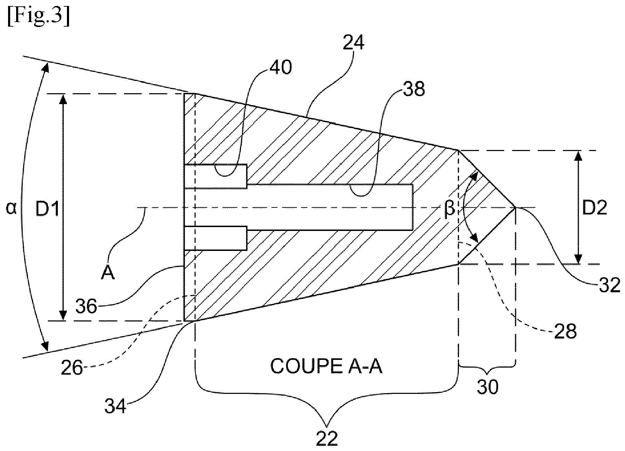

En se référant aux figures 2 et 3, la cheville 16 de fixation comportant un corps 22 de fixation par soudage qui est délimité radialement par une face 24 externe qui présente une forme tronconique de révolution autour d'un axe "A" principal. Comme son nom l'indique, le corps 22 de fixation a pour fonction de de fixer la cheville 16 a son support, ici au panneau 10. Le corps 22 de fixation s'étend ainsi depuis une grande base 26 destinée à sensiblement affleurer à la surface du support 10, jusqu'à une petite base 28 destinée à être enfoncée en profondeur dans l'orifice 18 du support 10. La grande base 26 et la petite base 28 présentent chacune un contour circulaire. Le diamètre "D1" de la grande base est supérieur au diamètre "D2" de la petite base 28.

La face 24 externe est ici dénuée de protubérances. Plus particulièrement, la face 24 externe est ici dénuée de filetage. La face 24 externe peut néanmoins présenter des rugosités au niveau microscopique afin d'améliorer son coefficient de frottement.

La face 24 externe tronconique du corps 22 présente un angle "α" au sommet qui est compris entre 24° et 25°. L'angle "α" au sommet de la face 24 externe tronconique du corps 22 est de préférence sensiblement égale à 24,5°.

La cheville 16 comporte ici une pointe 30 de centrage de forme conique de révolution autour de l'axe "A" principal qui s'étend axialement dans la continuité de la face 24 externe tronconique du corps 22 depuis la petite base 28 jusqu'à un sommet 32 qui forme une première extrémité axiale libre de la cheville 16. La pointe 30 de centrage a pour fonction de guider et maintenir la cheville 16 coaxialement à l'orifice 18 lors de son enfoncement.

La pointe 30 de centrage présente un angle "β" au sommet supérieur à l'angle "α" au sommet de la face 24 externe tronconique du corps 22. La pointe présente par exemple un angle "β" au sommet d'environ 90°.

La cheville 16 présente une deuxième extrémité libre axialement opposée à la pointe 30 de centrage. La deuxième extrémité libre est formée par une face 36 d'extrémité libre. La face 36 d'extrémité libre s'étend dans un plan orthogonal à l'axe "A" principal de la cheville 16. La face 36 d'extrémité libre présente un contour circulaire.

La cheville 16 comporte ici une tête 34 qui est agencée à l'extrémité axiale opposée à celle de la pointe 30 de centrage. La tête 34 se présente ici sous la forme d'un tronçon cylindrique de révolution de même diamètre que la grande base 26. La tête 34 est ainsi agencée dans le prolongement du corps 22. La tête 34 présente une face libre qui forme la face 36 d'extrémité libre de la cheville 16.

En variante non représentée de l'invention, la tête présente un diamètre supérieur à celui de la grande base 26, et elle est destinée à faire saillie par rapport à la surface du panneau 10 lorsque la cheville 16 est fixée au panneau 10.

Selon encore une autre variante, la cheville ne comporte pas de tête, la face d'extrémité libre de la cheville étant alors formée directement par la grande base 26 du corps 22 de fixation.

La cheville 16 de fixation est réalisée en une seule pièce en un matériau plastique, par exemple par moulage. Ledit matériau plastique présente une température de fusion qui est sensiblement égale à la température de fusion du matériau constituant l'âme 12 du panneau 10. Il s'agit par exemple d'une cheville 16 réalisée en PET, en PETG, en PET recyclée, ou en tout autre matériau plastique adapté.

La vis 20 qui est destinée à être fixée à la cheville 16 est ici une vis 20 autotaraudeuse. Pour recevoir cette vis 20 et permettre son guidage, le corps 22 comporte un alésage 38 central lisse borgne qui débouche uniquement par la face 36 d'extrémité libre. Un tel alésage 38 est généralement connu sous la dénomination "avant-trou".

Un tel alésage 38 lisse permet à la cheville d'être utilisée en association avec plusieurs types de fixation telles qu'une vis pour pour le métal, une vis pour le bois ou encore une fixation chimique.

L'alésage 38 central est coaxial à l'axe "A" principal. L'alésage 38 comporte un diamètre qui est inférieur au diamètre nominal de la vis 20. De préférence, le diamètre de l'alésage 38 est sensiblement égal au diamètre en fond de filet de la vis 20.

La cheville 16 présente en outre une rigidité suffisante pour permettre sa friction en rotation et son enfoncement dans l'âme 12 du panneau 14 sans sensiblement subir de déformations. A cet effet, le corps 22 est plein entre l'alésage 38 central et sa face 24 tronconique externe. Le corps 22 de fixation se présente ici sous la forme d'un bloc plein dans lequel est réalisé l'alésage 38 central.

En outre, la face 36 d'extrémité libre de la cheville 16 présente une empreinte 40 destinée à permettre l'accouplement avec un outil de mise en rotation autour de son axe principal. L'empreinte 40 peut se présenter sous la forme d'une ou de plusieurs encoches réalisées dans la face 36 d'extrémité libre, et/ou sous la forme d'une ou de plusieurs protubérances réalisées sur la face 36 d'extrémité libre.

A titre d'exemple non limitatif, il s'agit ici d'une encoche de profil rectangulaire qui traverse diamétralement l'ouverture de l'alésage 38 central. Le petit côté du profil rectangulaire présente ici une dimension inférieure à celle du diamètre de l'alésage 38 central.

En variante non représentée, il s'agit de plusieurs encoches réparties régulièrement autour de l'axe "A" principal.

On décrit à présent un procédé d'assemblage de la cheville 16 de fixation avec un support de matériau plastique, ici avec le panneau 10, en référence aux figures 4 à 6. La cheville 16 présente de préférence une longueur axiale inférieure à l'épaisseur de l'âme 12 de manière que la cheville 16 ne traverse pas l'âme de part en part une fois assemblée.

Lorsque, comme c'est le cas ici, la face du panneau 10 comporte un pli 14 qui recouvre l'âme 12, une étape préalable de poinçonnage est réalisée. Au cours de cette étape, le pli 14 est poinçonné à l'aide d'un outil adapté, par exemple un poinçon ou une pointe, pour créer une perforation 42 dans le pli 14 à l'endroit où l'on souhaite fixer la cheville 16, comme cela est représenté à la figure 4.

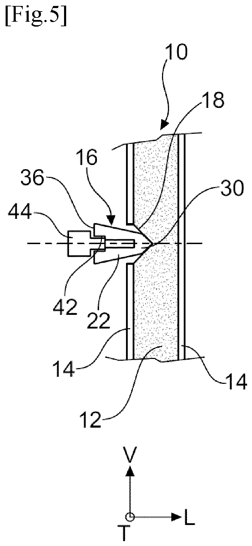

A l'issue de cette étape préalable, une étape de perçage d'un orifice dans une face du support est réalisée. Lors de cette étape, une perceuse (non représentée) équipée d'une mèche ou d'une fraise conique est utilisée pour percer l'orifice 18. Lorsque l'étape préalable de poinçonnage a été réalisée, la perforation 42 permet de positionner correctement la pointe de la mèche ou de la fraise. L'orifice 18 obtenu est représenté à la figure 5.

Le diamètre maximal de l'orifice 18, au niveau de l'interface avec le pli 14, est sensiblement égale au diamètre "D1" de la grande base 26 du corps 16 de fixation.

Par ailleurs, l'orifice 18 présente une profondeur qui est ici inférieure à la longueur du corps 22 de fixation. De préférence, la profondeur de l'orifice 18 est ici choisie de manière que la pointe 30 de centrage de la cheville 16 puisse être introduite dans l'orifice 18.

L'orifice 18 présente une forme sensiblement conique.

Après l'étape de perçage, lors d'une étape de positionnement, la petite base 28 du corps 22 de la cheville 16 de fixation dans l'ouverture de l'orifice 18, comme représenté à la figure 5. Plus particulièrement, la pointe 30 de centrage est insérée axialement dans l'orifice 18 jusqu'à être en contact avec l'âme 12. Dans cette position, au moins une portion du corps 22 demeure à l'extérieur de l'orifice 18.

Ensuite, une étape d'enfoncement axial et de mise en rotation de la cheville 16 de fixation est mise en oeuvre. Lors de cette étape, un outil 44 est accouplé à la cheville 16 par emboîtement avec l'empreinte 42. L'outil 44 est entraîné en rotation à grande vitesse, par exemple par une perceuse, autour de l'axe "A" principal de la cheville 16. En même temps, l'outil 44 applique une poussée axiale de la cheville 16 vers le panneau 10. La vitesse de rotation de la cheville 16 est suffisante pour que, combinée avec la poussée axiale, la face 24 externe tronconique du corps 22 frotte contre le matériau constituant l'âme 12. Cela provoque l'échauffement du matériau constituant la cheville 16, d'une part, et l'échauffement du matériau constituant l'âme 12, d'autre part.

Comme expliqué précédemment, le matériau plastique du support, ici de l'âme 12, présente une température de fusion sensiblement égale à celle du matériau constituant le corps 22 de la cheville 16.

La vitesse de rotation et la poussée axiale sont suffisants pour provoquer la fusion simultanée d'une couche superficielle de la face 24 externe du corps 22 et d'une couche superficielle de la de l'orifice 18. Les matériaux en fusion de la cheville et du support se mélangent alors. La fusion du matériau constituant le support, ici l'âme 12, permet en outre de faire pénétrer axialement la cheville 16 plus profondément dans l'âme 12.

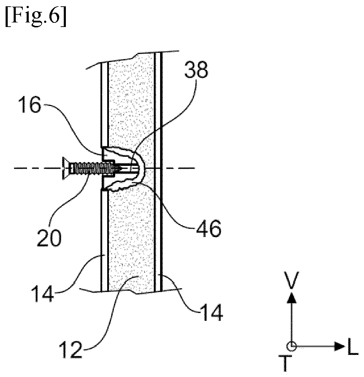

Lorsque la cheville 16 a été enfoncée suffisamment, par exemple lorsque la grande base 26 affleure à la face du support, ici de l'âme 12, une étape de refroidissement est mise en oeuvre. Au cours de cette étape, la rotation et la poussée sont interrompues pour que le mélange des matériaux plastiques en fusion interposé entre la cheville 16 et l'âme 12 se solidifie pour réaliser la fixation par soudage de la cheville 16 dans le support. Ainsi, en coupe, come représenté à la figure 6, une zone 46 de soudage à l'interface entre la cheville 16 et l'âme 12 est formée du mélange solidifié qui assure la fixation de la cheville 16 dans l'âme 12.

A l'issue du procédé d'assemblage de la cheville 16 avec le panneau 10, il est possible de fixer un objet au panneau 10 au moyen d'une vis 20 qui est vissée dans l'alésage 38 central de la cheville 16. On a observé qu'avec un tel assemblage, la cheville 16 était capable de résister à un couple de serrage pouvant s'élever à 17 Nm sans être arrachée du panneau 10. Cela permet de serrer la vis 20 sans risquer de rompre la liaison soudée entre la cheville 16 et l'âme 12.

## Revendications

1. Cheville (16) de fixation qui est destinée à être fixée par soudage par rotation dans un orifice (18) d'un support (10) en matériau plastique, la cheville (16) de fixation comportant un corps (22) de fixation par soudage qui présente une face (24) externe de forme tronconique de révolution autour d'un axe (A) principal qui s'étend depuis une grande base (26) destinée à affleurer à une surface du support (10), jusqu'à une petite base (28) destinée à être enfoncée axialement dans l'orifice (18) du support (10),
le corps (22) de fixation comportant un alésage (38) central lisse borgne qui débouche uniquement par une face (36) d'extrémité axiale libre de la cheville (16), le corps (22) de fixation étant plein entre l'alésage (38) central et sa face (24) tronconique externe, **caractérisé en ce que** ladite cheville comporte également une pointe (30) de centrage de forme conique de révolution autour de l'axe (A) principal qui s'étend axialement dans la continuité de la face (24) externe tronconique du corps depuis la petite base (28), un sommet (32) de la pointe (30) de centrage formant une première extrémité axiale de la cheville (16).

2. Cheville (16) de fixation selon la revendication précédente, **caractérisée en ce que** la face (24) externe tronconique du corps présente un angle (α) au sommet qui est compris entre 24° et 25°.

3. Cheville (16) de fixation selon la revendication précédente, **caractérisée en ce que** l'angle (α) au sommet de la face (24) externe tronconique du corps (22) de fixation est sensiblement égal à 24,5°.

4. Cheville (16) de fixation selon l'une des revendications précédentes, **caractérisée en ce que** la pointe (30) de centrage présente un angle (β) au sommet supérieur à l'angle (α) au sommet de la face (24) externe tronconique du corps (22) de fixation.

5. Cheville (16) de fixation selon la revendication précédente, **caractérisée en ce que** la pointe (30) de centrage présente un angle (β) au sommet d'environ 90°.

6. Cheville (16) de fixation selon l'une quelconque des revendications précédentes, **caractérisée en ce qu'**elle est réalisée en une seule pièce en un matériau plastique, par exemple par moulage.

7. Cheville (16) de fixation selon l'une quelconque des revendications précédentes, **caractérisé en ce que** la grande base (26) du corps (22) de fixation forme la face (36) d'extrémité libre de la cheville (16).

8. Cheville (16) de fixation selon l'une quelconque des revendications précédentes, **caractérisée en ce que** la grande base (26) présente une empreinte (42) destinée à permettre l'accouplement avec un outil (44) de mise en rotation autour de son axe (A) principal.

9. Procédé d'assemblage de la cheville (16) de fixation selon l'une quelconque des revendications précédentes avec un support (12) de matériau plastique, le matériau plastique du support (12) présentant une température de fusion sensiblement égale à celle du matériau constituant le corps (22) de fixation de la cheville (16), le procédé comportant chronologiquement :
- une étape de perçage d'un orifice (18) dans une face du support (10) ;
- une étape de positionnement de la petite base (28) du corps (22) de fixation de la cheville (16) de fixation dans l'ouverture de l'orifice (18) ;
- une étape d'enfoncement axial et de mise en rotation de la cheville (16) de fixation à une vitesse suffisante et avec une poussée axiale suffisante pour que le frottement entre la face (24) externe tronconique du corps (22) de fixation et le matériau constituant le support (12) provoque la fusion simultanée d'une couche superficielle de la face (24) externe du corps (22) de fixation et du matériau en contact du support, les matériaux en fusion de la cheville (16) de fixation et du support (12) se mélangeant ;
- une étape de refroidissement qui intervient lorsque la grande base (26) du corps (22) de fixation affleure sensiblement à la face du support (12), au cours de laquelle la rotation est interrompue pour que le mélange de matériau plastique en fusion se solidifie pour réaliser la fixation par soudage de la cheville (16) de fixation dans le support (12).

10. Procédé selon la revendication précédente, **caractérisé en ce que** le diamètre du perçage est sensiblement égal au diamètre de la grande base (26) du corps (22) de fixation.

11. Ensemble composé d'une cheville (16) de fixation et d'un support (12) de matériau plastique, ladite cheville (16) étant destinée à être fixée par soudage par rotation dans un orifice (18) du support (12), la cheville (16) de fixation comportant un corps (22) de fixation par soudage qui présente une face (24) externe de forme tronconique de révolution autour d'un axe (A) principal qui s'étend depuis une grande base (26) destinée à affleurer à une surface du support (10), jusqu'à une petite base (28) destinée à être enfoncée axialement dans l'orifice (18) du support (10), le corps (22) de fixation comportant un alésage (38) central lisse borgne qui débouche uniquement par une face (36) d'extrémité axiale libre de la cheville (16), le corps (22) de fixation étant plein entre l'alésage (38) central et sa face (24) tronconique externe, **caractérisé en ce que** la cheville (16) de fixation et le support (12) sont constitués d'un même matériau plastique.
